(19) Europäisches Patentamt
European Patent Office
Office européen des brevets

(11) Publication number: 0 198 870 B1

(12) EUROPEAN PATENT SPECIFICATION

(45) Date of publication of patent specification: 20.06.90

(51) Int. Cl.$^5$: **A 01 N 47/12**, A 01 N 47/10, A 01 N 37/22, A 01 N 43/76, A 01 N 43/28

(21) Application number: 85905099.9

(22) Date of filing: 08.10.85

(86) International application number: PCT/HU85/00059

(87) International publication number: WO 86/02237 24.04.86 Gazette 86/09

# (54) HERBICIDAL COMPOSITIONS FOR KILLING MONOCOTYLEDONOUS AND DICOTYLEDONOUS WEEDS IN MAIZE.

(30) Priority: 17.10.84 HU 387984

(43) Date of publication of application: 29.10.86 Bulletin 86/44

(45) Publication of the grant of the patent: 20.06.90 Bulletin 90/25

(84) Designated Contracting States: AT DE FR GB IT

(56) References cited:
DD-A- 202 368
GB-A-1 002 661
US-A-4 415 353

(73) Proprietor: NITROKEMIA IPARTELEPEK
Pf. 45
H-8184 Füzfögyártelep (HU)

(73) Proprietor: KSZE NÖVENYTERMELESI RENDSZER
2, Paskum u.
H-7100 Szekszard (HU)

(72) Inventor: CSIBOR, István
160, Wosinszky u.
H-7100 Szekszárd (HU)
Inventor: HORVATH, Akos
3, Felszabadulás u.
H-7143 Öcsény (HU)
Inventor: REISINGER, Katalin
2, Németh L. u.
H-7632 Pécs (HU)
Inventor: KALLO, Sándor
72, Pozsonyi u.
H-8000 Székesfehérvár (HU)
Inventor: ÖRDÖG, Attila
39, Bezerédy u.
H-7150 Bonyhád (HU)
Inventor: IGARI, Zsuzsanna
6, Ocskó u.
H-7100 Szekszárd (HU)

**The file contains technical information submitted after the application was filed and not included in this specification**

EP 0 198 870 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(72) Inventor: SZELL, Endre
19, Déryné u.
H-6726 Szeged (HU)
Inventor: CZEKMANY, Arnold
10, Petofi u.
H-8220 Balatonalmádi (HU)
Inventor: FODOR, Ferenc
13, Bugyogó forrás u.
H-8184 Balatonfüzfo "-Gyártelep (HU)
Inventor: HENGER, Károly
28, Gagarin u.
H-8184 Balatonfüzfo "-Gyártelep (HU)
Inventor: HORVATH, Andras
10, Gagarin u.
H-8184 Balatonfüzfo "-Gyártelep (HU)
Inventor: PAMUK, Gyula
12, Petofi S.u
H-8220 Balatonalmádi (HU)
Inventor: TÖMÖRDI, Elemér
4/b, Botev u.
H-8200 Veszprém (HU)

(74) Representative: Eitle, Werner, Dipl.-Ing. et al
Hoffmann, Eitle & Partner Patentanwälte
Arabellastrasse 4
D-8000 München 81 (DE)

**Description**

The present invention is related to herbicidal compositions for killing monocotyledonous and dicotyledonous weeds in maize and a method for killing said weeds.

We have now found that antidoted selective herbicidal compositions containing together a chloro acetanilide derivative of the general formula:

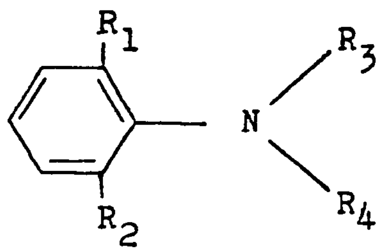

(I)

wherein

$R_1$ and $R_2$ represent independently from each other hydrogen or $C_{1-4}$ alkyl,

$R_3$ stands for methoxy-methyl, ethoxy-methyl, propyl or isopropyl group,

$R_4$ stands for chloroacetyl

and a thiolcarbamate derivative of the general formula (II)

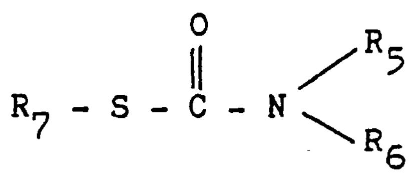

(II)

wherein $R_5$, $R_6$ and $R_7$ represent independently from each other straight or branched chain $C_{1-5}$ alkyl, as herbicidal active ingredient and N-(dichloroacetyl)-1-oxa-4-aza-spiro-(4,5)-decane of the formula (III)

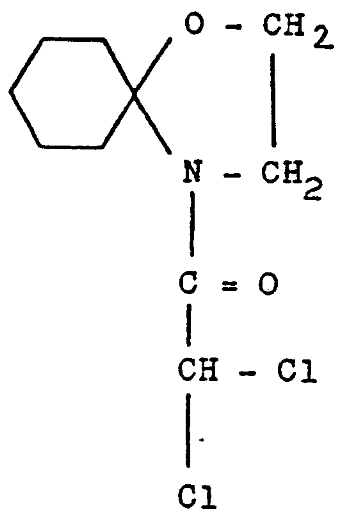

(III)

or 2-(dichloromethyl)-2-methyl-4-ethyl-1,3-dioxolane of the formula (IV)

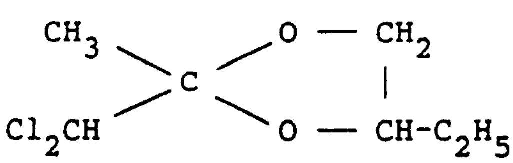

(IV)

or 2-(dichloro-methyl)-2-methyl-1,3-dioxolane of the formula (V)

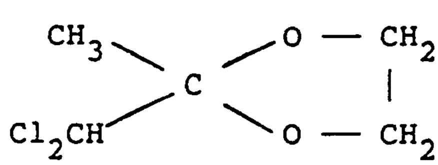

(V)

as antidote besides liquid solvents and/or diluents, preferably xylene, and surfactants, preferably ionic or

non-ionic tensides, wherein the weight ratio of the chloro acetanilide derivate of the general formula (I) and the thiol carbamate derivative of the general formula (II) and the antidotes amounts to 1,2—1:3—1:1—0,2. show apart from the strong monocctyledonous weed killing effect a surprisingly good dicotyledonous weed killing activity. The active ingredients of the mixture and the preparation thereof as well as their herbicidal activity are disclosed in the following Patent Specifications: the preparation of substituted acetanilides and their use as herbicides was disclosed in US—PS Nos. 3.442.945 and 3.547.620, herbicides containing thiol carbamates are disclosed in US—PS 2.913.327, the known N-(dichloroacetyl)-1-oxa-4-aza-spiro-(4,5)-decane antidote is dislosed in HU—PS 176 784, whereas 2-(dichloromethyl)-2-methyl-4-ethyl-1,3-dioxolane and 2-(dichloromethyl)-2-methyl-1,3-dioxolane antidotes are referred to in European Patent Application No. 8 111 0371.2.

In Tables I and II the trivial and chemical names of those herbicides and antidotes are enumerated which are mentioned throughout the specification.

TABLE I
Herbicides of acetanilide type

| Trivial name | Chemical name |
|---|---|
| PROPACHLOR | N-isopropyl-alpha-chloro-acetanilide |
| ACETOCHLOR | 2-methyl-6-ethyl-N-(ethoxymethyl)-chloroacetanilide |
| ALACHLOR | 2,6-diethyl-N-(methoxymethyl)-chloroacetanilide |

TABLE II.A
Herbicides of thiol carbamate type

| Trivial name | Chemical name |
|---|---|
| EPTC | S-ethyl-N,N-dipropyl-thiol carbamate |
| VERNOLATE | S-propyl-N,N-dipropyl-thiol carbamate |
| BUTYLATE | S-ethyl-N,N-di-isobutyl-thiol carbamate |

TABLE II.B

| Letter-index | Name | Manufacturer | Active ingredient content |
|---|---|---|---|
| a | Acenit 50 EC | Nitrokémia Ipartelepek | Acetochlor 50% by vol. |
| b | Niptán 80 EC | Nitrokémia Ipartelepek | EPTC 80% by volume |
| c | Eradicane 6E | Stauffer Co. | EPTC 72% by volume |
| d | Aktikon | Nitrokémia Ipartelepek | Atrazin 90% by weight |
| e | Fenuron 50 WP | Nitrokémia Ipartelepek | Fenuron 50% by weight |
| f | Banvel 480 | Chemie Linz | Dicamba 480 g/l |
| i | Niticid 65 WP | Nitrokémia Ipartelepek | Propachlor 65% by vol. |
| j | Acenit A 500 EC | Nitrokémia Ipartelepek | Acetochlor 500 g/l<br>AD—67 antidote 50 g/l |
| k | Maloran 50 WP | Ciba-Geigy | Chlorbromuron 50% by w. |
| l | Lasso | Monsanto Co. | Alachlor 480 g/l |

TABLE III
Antidotes

| Trivial name | Chemical name |
|---|---|
| AD—67 | N-(dichloroacetyl)-1-oxa-4-aza-spiro-(4,5)-decane |
| MG—191 | 2-(dichloromethyl)-2-methyl-1,3-dioxolane |
| MG—235 | 2-(dichloromethyl)-2-methyl-4-ethyl-1,3-dioxolane |

TABLE IV
Other herbicides

| Trivial name | Chemical name |
|---|---|
| Atrazin | 2-chloro-4,6-bis-(ethylamino)-s-triazine |
| Dicamba | 2-methoxy-3,6-dichloro-benzoic acid |
| Chlorobromuron | N-(4-bromo-3-chlorophenyl)-N'-methoxy-N'-methyl-urea |
| Fenuron | N,N-dimethyl-N'-phenyl-urea |

In agriculture S-ethyl-N,N-dipropyl thiol carbamate is applied into the soil combined with an antidote as a pre-sowing herbicide. Acetochlor is used for weed-killing in maize per se or combined with N-(dichloroacetyl)-1-oxa-4-aza-spiro-(4,5)-decane antidote as a pre-emergent herbicide by spraying it on the soil. Both herbicides are typical monocotyledonous weed-killing agents.

In maize cultivation the following problems arise:

In spite of the widespread use of graminicides the tendency of increased growth of monocotyledonous undesired plants can be still observed. This phenomenon particularly appears in maize grown in two-three years old mono-cultures.

Next to the dominance of monocotyledonous weeds the spreading of dicotyledonous weeds is still a great problem, particularly the Amaranthus species which are resistant to atrazine represent a great problem.

Part of the used herbicides does not act optially under humid soil conditions (thiol carbamates) and another part under dry conditions (such as chloro acetanilides, triazines, ureas).

There is no herbicide in maize, which acts as a good herbicide independently of the humus content of the soil and of its physical heaviness.

In order to obtain a completely effective soil herbicide out of the presently applied herbicides the demands in the cultivation conditions of the soil are extremely high, a soil surface which is cloddy and contaminated with stubble residue can considerably reduce the activity of the herbicides.

The aim of the present invention was to elaborate a plant protective agent which is suitably for

the effective weed-killing in case of dicotyledonous undesired plants next to monocotyledonous undesired plants,

acting without any significant fluctuation both during dry periods and periods of rainfalls,

giving a good herbicide activity independently of the type of the soil and of culture condition.

This aim could be achieved by elaborating a herbicide combination consisting of a thiol carbamate type herbicide, an acetanilide type herbicide and an antidote and solid/or liquid carriers and surfactants.

The mentioned typical monocotyledonous weed killing agents unexpectedly show an excellent dicotyledonous weed killing activity and this activity is particularly advantageous against undesired plant species which are resistant to atrazine, such as the species Amaranthus and Chenopodium. We have also found that when applying the active ingredients in combination according to the invention the activity on monocotyledonous undesired sprouting plants is more intensive than when applied separately. This increased activity can also be observed against such monocotyledonous weeds difficult to combat — as Panicum spp., and sprouting Sorgum halepense.

A further unexpected effect occured, i.e. the activity of the herbicide combination was independent of soil type, the quality of the soil preparation and of the precipitation conditions.

The present invention is directed to antidoted selective herbicidal compositions suitable for monocotyledonous and dicotyledonous weed killing in maize according to claim 1. The compositions may contain any other antidote as well.

Related to the total weight of the composition it contains 0.5 to 95% by weight of liquid carrier, e.g. 7 to 70% of aromatic solvents, particularly xylene, as solvent transmitter 5 to 40% aliphatic alcohols containing 1 to 4 carbon atoms or aliphatic ketones containing 1 to 6 carbon atoms, dimethyl formamide, as emulsifier 5 to 30% by weight of ionogenic and non-ionogenic tensides or a mixture thereof.

The present invention further provides a method of treatment of maize for combatting undesired mono- and dicotyledonous plants comprising applying in the soil on the sowing area a chloro acetanilide of the general formula (I) as herbicide at a rate of 1.0—7.0 kg/ha, preferably 1.0—4.5 kg/ha and a thiol carbamate derivative of the general formula (II) as herbicide at a rate of 1.0—10.0 kg/ha, preferably 1.0—8.0 kg/ha and optionally antidote, preferably a compound of the formula (III), (IV) or (V) at a rate of 0.1—4 kg/ha, preferably 0.3—3.0 kg/ha. before sowing simultaneously in finely divided form. The herbicides and antidotes according to the invention can be formulated to liquid compositions by methods known per se. When formulating emulsifiable concentrates as solvents mainly aromatic solvents, and as solvent transmitters $C_{1-4}$ aliphatic alcohols or $C_{1-6}$ aliphatic ketones, optionally dimethyl formamide may be used. As emulsifying agent a mixture of ionogenic and/or non-ionogonic tensides is used, such as Berol 930, Berol 938, Tensiofix 7438, Tensiofix 7453 (Berol is manufactured by the Swedish firm Kemi AB and

Tensiofix by the Belgian firm Tensia SA). As solvent transmitters methanol, ethanol, acetone and methyl ethyl ketone may be used. The following ionic and non-ionic tensides are preferred:

alkyl-phenoxy-polyethoxy ethanols,
poly(oxy-ethyl)ated vegetable oils,
poly(oxy-ethyl)ated fatty alcohols
poly(oxy-ethylene)glycerol fatty acid esters,
aryl alkyl sulfonic acid salts
alkoxy-polyethoxy-ethanol phosphates.

The following Examples illustrate the composition according to the invention in the form of emulsifiable concentrates:

Example 1
Emulsifiable concentrates

| | | | | | |
|---|---|---|---|---|---|
| 1.1 | Composition | | 1.2 | Composition | |
| | EPTC | 360 g | | EPTC | 360 g |
| | Acetochlor | 200 g | | Acetochlor | 200 g |
| | AD—67 antidote | 60 g | | AD—67 antidote | 90 g |
| | Berol 930 | 50 g | | Tensiofix 7438 | 40 g |
| | Berol 938 | 50 g | | Tensiofix 7453 | 60 g |
| | Xylene | 280 g | | Xylene | 250 g |
| 1.3 | Composition | | 1.4 | Composition | |
| | EPTC | 360 g | | EPTC | 360 g |
| | Alachlor | 240 g | | Alachlor | 240 g |
| | AD—67 antidote | 60 g | | AD—67 antidote | 90g |
| | Berol 930 | 50 g | | Berol 930 | 50 g |
| | Berol 938 | 50 g | | Berol 938 | 50 g |
| | Methyl-ethyl-ketone | 100 g | | ketone | 100 g |
| | Xylene | 140 g | | Xylene | 110 g |
| 1.5 | Composition | | 1.6 | Composition | |
| | Butylate | 360 g | | Butylate | 360 g |
| | Acetochlor | 200 g | | Acetochlor | 200 g |
| | AD—67 antidote | 60 g | | AD—67 antidote | 90g |
| | Tensiofix 7438 | 60 g | | Berol 950 | 50 g |
| | Tensiofix 7453 | 40 g | | Berol 938 | 50 g |
| | Xylene | 280 g | | Xylene | 250 g |
| 1.7 | Composition | | 1.8 | Composition | |
| | Butylate | 360 g | | Butylate | 360 g |
| | Alachlor | 240 g | | Alachlor | 240 g |
| | AD—67 antidote | 60 g | | AD—67 antidote | 90 g |
| | Berol 950 | 50 g | | Tensiofix 7438 | 40 g |
| | Berol 958 | 50 g | | Tensiofix 7415 | 40 g |
| | Xylene | 140 g | | Xylene | 110 g |
| | Methyl-ethyl-ketone | 100 g | | | |
| 1.9 | Composition | | 1.10 | Composition | |
| | Butylate | 250 g | | Propachlor | 250 g |
| | Propachlor | 250 g | | EPTC | 250 g |
| | AD—67 antidote | 50 g | | AD—67 antidote | 50 g |
| | Berol 950 | 45 g | | Tensiofix 7438 | 50 g |
| | Berol 958 | 5 g | | Tensiofix 7453 | 50 g |
| | Dimethylformamide | 160 g | | Dimethylformamide | 90 g |
| | Xylene | 240 g | | Xylene | 260 g |

In the following biological examples the activity of the combination according to the invention was tested under various soil, precipitation and temperature conditions and by various herbicidal application methods. The following mono- and dicotyledonous plants occured on the test area in the Examples.

TABLE V
Monocotyledonous plants

| Abbreviated name | International name | English name |
|---|---|---|
| ECHCR | Echinochloa crus-galli | barnyard grass |
| PANMI | Panicum miliaceum | |
| SETGL | Setaria glauca | bristle grass |
| SETVI | Setaria viridis | green bristle grass |
| SORHA | Sorgum halepense | |

TABLE VI
Dicotyledonous plants

| Abbreviated name | International name | English name |
|---|---|---|
| AMALL | Amaranthus albus | |
| AMABL | Amaranthus blithoides | |
| AMACH | Amaranthus chlorostachys | |
| AMARE | Amaranthus retroflexus | pig weed |
| CANSA | Cannabis sativa | |
| CHEAL | Chenopodium album | fat hen |
| CHENY | Chenopodium hybridum | |
| CIRAR | Cirsium arvense | creeping thistle |
| HBTR | Hibiscus trionum | |
| LATTU | Lathyrus tuberosus | |
| MERAN | Mercurialis annus | dog's mercury |
| POLLA | Polygonum lapathifolium | |
| RESLU | Reseda lutea | wild mignonette |
| SINAR | Sinapis arvensis | yellow charlock |
| STAAN | Stachys annua | annual woundwort |
| EQUAR | Equisetum arvense | common horsetail |

The effect of the combination according to the invention, of the control and of the comparative mono- and dicotyledonous weed killers upon maize and upon weeds was evaluated on the basis of the EWRC value.

TABLE VII
Explanation of EWRC scale

| Weed killing activity | General impression | Value of EWRC scale | Phytotoxic symptoms on the domesticated plant |
|---|---|---|---|
| 100 | excellent | 1 | none |
| 98 | very good | 2 | very slight symptoms |
| 95 | good | 3 | slight symptoms |
| 90 | satisfactory | 4 | strong, but probably transient symptoms, no crop decrease is probable |
| 82 | doubtful | 5 | symptoms of unknown effect |
| 70 | not satisfactory | 6 | damaging symptoms can be observed |
| 55 | bad | 7 | symptoms of bad damage |
| 30 | very bad | 8 | symptoms of very bad damage |
| 0 | cannot be used | 9 | total killing |

Example 2
Biological test results

Soil conditions:
Type of soil: chernozem brown forest oil
Humus: 2.9%
Cledgyness (Atany): 43
pH value: 6.2
Sowing time of maize: 23.04
Art: Pi 3780

| Weeds: | Piece/$m^2$ on the control area |
|---|---|
| Setaria glauca | 21 |
| Echinochloa crus-galli | 14 |
| Amaranthus retroflexus | 8 |

The average weed killing of the control area was 80% at the end of the cultivation period.

Test Conditions:
Parcel size: 0.5 ha(20 × 250 m)
Control: 4 × 4 m covered control
Spray liquid: 300 l/ha
Day of treatments: 17.04 (presowing) 26.04 (preemergence)
Precipitation conditions:
Within 7 days after the presowing treatment: 12 mm
Within 7 days after the preemergent treatment: 19 mm

TABLE VIII

| Method of treatment | Active ingredient dose | Application method | Time of evaluation | Weed killing effect EWCR values AMARE | SETGL | ECHCR | Phytotoxic effect |
|---|---|---|---|---|---|---|---|
| 1. Control/untreated | — | — | 1 | 9 | 9 | 9 | 1 |
| 2. Acetochlor[a] | 2.0 | pre | 1 | 4 | 4 | 4 | 1 |
| | | | 2 | 5 | 4 | 4 | 1 |
| | | | 3 | 6 | 4 | 5 | 1 |
| 3. EPTC + | 4.5 | | 1 | 5 | 3 | 3 | 1 |
| AD—67 antidote[b] | 0.3 | ppi | 2 | 6 | 3 | 3 | 1 |
| 4. EPTC+ | 3.0 | | 1 | 1 | 2 | 2 | 1 |
| AD—67 antidote[b]+ | 0.3 | ppi | 2 | 1 | 2 | 2 | 1 |
| acetochlor | 1.5 | pre | | | | | |
| 5. EPTC+ | 4.5 | | 1 | 2 | 2 | 2 | 1 |
| R—25788 antidote[c]+ | 0.48 | ppi | 2 | 2 | 2 | 2 | 1 |
| atrazin[d] | 1.2 | pre | 3 | 2 | 2 | 2 | 1 |
| 6. Acetochlor[a]+ atrazin[d] | 2.0 | | 1 | 2 | 4 | 4 | 1 |
| | 1.0 | | 2 | 3 | 4 | 4 | 1 |
| | | | 3 | 3 | 4 | 5 | 1 |

Time of evaluation:
1. 05. 06.
2. 27. 07
3. 01. 10.

ppi = applied to the soil presowing
pre = applied after sowing before emergence

Table VIII shows that Acenit 50 EC (No. 2) applied alone and the combination of EPTC (No. 3) used alone and AD—67 antidote (Niptan 80 EC) was ineffective against the dicotyledonous Amaranthus retrofluxus, whereas against the monocotyledonous Echinochloa crusgalli the activity proved to be good and satisfactory. In test No. 4 EPTC + AD—67 antidote was applied on the sowing area ppi and the acetochlor was applied in the same area pre.

The table shows that these two active ingredients killing mono-cotyledons excellently kill the dicotyledonous Amaranthus next to monocotyledons. In tests 5 and 6 two combinations are shown, which combat usual mono- and dicotyledons, where next to the monocotyledonous weed killing agents: antidoted EPTC and Acetochlor atrazine was used against dicotyledons.

The table shows that the combination according to the invention used in test No. 4 was more effective against the dicotyledonous Amaranthus retrofluxus than the known compositions, and at the same time its activity against monocotyledonous weeds is equal or even better than that of the known compositions. It should be noted, that the active ingredients in the known compositions are applied at a higher rate than in the combinations according to the invention and even so they do not achieve the effect of the combinations according to the invention. The test series show unambigously that when spraying the active ingredients according to the invention subsequently on the sowing area the active ingredients act synergistically on each other resulting thus a broader spectrum of activity and an increased specific activity.

Example 3

Soil conditions:

Type of soil: lime-deposit chernozem
Humus: 2.1%
Heaviness (Arany): 39
pH-value: 7.3

Heaviness number (Arany) indicates the % of the amount of water related to the weight of soil, needed to achieve the necessary plasticity.

Sowing time of maize:
02.05., 05.05., 06.05.
Art: Pi 3780 MSC

Weeds: The test area is covered mainly by monocotyledonous weeds mainly ECHCR, SETGL, dicotyledonous weeds occur only moderately (mainly CHEAL, AMARE, AMABL, AMACH). The average coverage of the control areas (frequency %) is shown below the EWRC value tables.

Test conditions:

Parcel size: 4 × 10 m
Number of replicates: 4
Control: 4 × 10 m between the treated parcels, 3 per replicates
Spray liquid: 300 l/ha
Time of treatments: ppi: 28.04, 18.05.

Precipitation conditions:

Within 7 days after presowing treatment: 4—5 mm
Within 7 days after pre-emergent treatment: 22 mm

An outstanding result was obtained in the test by using EPTC—360 g/l + acetochlor—200 g/l + AD—67—15 %.

The monocotyledonous weed killing was excellent or good starting from the treatment until the end evaluation resp. during the whole vegetation period. At the same time as expected as a result of the treatment all parcels treated with the combination according to the invention were entirely weed-free during the whole period of cultivation. EPTC and acetochlor active ingredients when sprayed separately showed a somewhat lower monocotyledonous weed killing effect (by 1—2 EWRC values). Said two active ingredients when sprayed separately showed also a weaker effect on the dicotyledonous weeds. The synergistic activity of EPTC and acetochlor used together according to the invention is proved by this Example both as to the increased activity and to the broadened spectrum of activity. The rates of 12 l/ha and 24 l/ha were applied in order to evaluate phytotoxicity: no phytotoxic symptoms were observed in case of the higher rates (12 l/ha, 24 l/ha) of the composition according to the invention with lower antidote content.

TABLE IX/A
Test results

Time of the first evaluation: 24. 05.

| Active ingredient | Dose kg/ha | Application method | Weeds EWRC values ECHCR 1.2.3 | SETGL 1.2.3 | CHEAL 1.2.3 | AMACH 1.2.3 | AMARE 1.2.3 | Phytotoxic activity 1.2.3 |
|---|---|---|---|---|---|---|---|---|
| 1. Acetochlor[a] + atrazin[d] | 2.1<br>1.4 | pre | 4 4 3 | 4 4 3 | 3 3 3 | | | 1 1 1 |
| 2. Acetochlor[a] + fenuron[e] | 2.1<br>1.05 | pre | 5 5 3 | 5 5 3 | | 3 3 3 | | 1 1 1 |
| 3. Acetochlor + EPTC + AD—67 (Composition according to Example 1.2 10 l(ha) | 2.0<br>3.6<br>0.9 | ppi | 1 1 2 | 1 1 2 | | 3 | | 1 1 1 |
| 4. Acetochlor + EPTC + AD—67 (Composition according to Example 1.2 12 l(ha) | 2.4<br>4.32<br>1.08 | ppi | 2 1 2 | 1 1 1 | | | | 1 1 1 |
| 5. Acetochlor + EPTC + AD—67 (Composition according to Example 1.2 24 l(ha) | 4.8<br>8.64<br>2.16 | ppi | 1 1 1 | 1 1 1 | | | | 1 1 1 |
| 6. Acetochlor + EPTC + AD—67 (Composition according to Example 1.1 10 l(ha) | 2.0<br>3.6<br>0.6 | ppi | 1 1 2 | 1 1 2 | 3 3 3 | 2 3 | | 1 1 1 |
| 7. Acetochlor + EPTC + AD—67 (Composition according to Example 1.1 12 l(ha) | 2.4<br>3.6<br>0.72 | ppi | 1 2 2 | 1 1 2 | | | | 1 2 1 |
| 8. Acetochlor + EPTC + AD—67 (Composition according to Example 1.1 24 l(ha) | 4.8<br>8.64<br>1.44 | ppi | 1 1 2 | 1 1 1 | | 3 3 3 | | 1 1 1 |
| 9. EPTC[b]<br>Acetochlor[a] | 3.75<br>2.0 | ppi<br>pre | 2 2 2 | 2 1 1 | 2 3 3 | 3 3 3 | | 1 1 1 |
| 10. Acetochlor[a]<br>Dicamba[f] | 2.5<br>0.268 | pre<br>post | 3 3 3 | 4 4 3 | | 3 3 3 | | 1 1 1 |
| Control frequency % | | | 46 | 38 | 8 | 8 | | |

Note: EWRC values were shown separately according to sowing time for each evaluation.

values related to maize sown on:
1. 02.05.
2. 05.05.
3. 16.05.

TABLE IX/B
Test results

Time of the second evaluation: 08.07.

| Active ingredient | Dose kg/ha | Application method | Weeds EWRC values ECHCR 1.2.3 | SETGL 1.2.3 | CHEAL 1.2.3 | AMACH 1.2.3 | AMARE 1.2.3 | Phytotoxic activity 1.2.3 |
|---|---|---|---|---|---|---|---|---|
| 1. Acetochlor[a] +<br>atrazin[d] | 2.1<br>1.4 | pre | 4 5 3 | 4 5 3 | 3 3 3 | | | 1 1 1 |
| 2. Acetochlor[a] +<br>fenuron[e] | 2.1<br>1.05 | pre | 6 5 4 | 6 5 3 | 2 2 | | | 1 1 1 |
| 3. Acetochlor +<br>EPTC +<br>AD—67<br>(Composition according to Example 1.2 10 l(ha) | 2.0<br>3.6<br>0.9 | ppi | 2 2 2 | 2 2 2 | | 4 4 4 | | 1 1 1 |
| 4. Acetochlor +<br>EPTC +<br>AD—67<br>(Composition according to Example 1.2 12 l(ha) | 4.8<br>4.32<br>1.08 | ppi | 2 2 1 | 1 1 1 | | | | 1 1 1 |
| 5. Acetochlor +<br>EPTC +<br>AD—67<br>(Composition according to Example 1.2 24 l(ha) | 4.8<br>8.6<br>2.16 | ppi | 2 2 2 | 1 1 1 | | | | 1 1 1 |
| 6. Acetochlor +<br>EPTC +<br>AD—67<br>(Composition according to Example 1.1 10 l(ha) | 2.0<br>3.5<br>0.6 | ppi | 2 2 2 | 2 2 2 | 3 3 3 | 3 3 3 | | 1 1 1 |
| 7. Acetochlor +<br>EPTC +<br>AD—67<br>(Composition according to Example 1.1 12 l(ha) | 2.4<br>3.6<br>0.72 | ppi | 1 2 2 | 1 1 2 | | | | 1 1 1 |
| 8. Acetochlor +<br>EPTC +<br>AD—67<br>(Composition according to Example 1.1 24 l(ha) | 4.8<br><br>1.44 | ppi | 1 1 2 | 1 2 1 | | 3 3 3 | | 1 1 1 |
| 9. EPTC[b]<br>Acetochlor | 3.75<br>2.0 | ppi<br>pre | 2 2 3 | 2 2 2 | 3 3 3 | 4 3 3 | | 1 1 1 |
| 10. Acetochlor[a]<br>Dicamba[f] | 2.5<br>0.268 | pre<br>post | 4 4 3 | 4 4 3 | | 3 4 3 | | 1 1 1 |
| Control frequency % | | | 52 | 54 | | 8 | | |

TABLE IX/C
Test results

Time of the third evaluation: 29.07.

| Active ingredient | Dose kg/ha | Application method | Weeds EWRC values ECHCR 1.2.3 | SETGL 1.2.3 | CHEAL 1.2.3 | AMACH 1.2.3 | AMARE 1.2.3 | Phytotoxic activity 1.2.3 |
|---|---|---|---|---|---|---|---|---|
| 1. Acetochlor[a] +<br>atrazin | 2.1<br>1.4 | pre | 5 5 3 | 5 5 3 | 3 3 3 | | | 1 1 1 |
| 2. Acetochlor[a] +<br>fenuron | 2.1<br>1.05 | pre | 6 6 4 | 6 6 3 | 3 3 | | | 1 1 1 |
| 3. Acetochlor[a] +<br>EPTC +<br>AD—67<br>(Composition according to Example 1.2 10 l(ha) | 2.0<br>3.6<br>0.9 | ppi | 3 3 2 | 3 3 2 | | 2 3 3 | | 1 1 1 |
| 4. Acetochlor +<br>EPTC +<br>AD—67<br>(Composition according to Example 1.2 12 l(ha) | 4.8<br>4.32<br>1.08 | ppi | 2 2 2 | 2 2 2 | | | | 1 1 1 |
| 5. Acetochlor +<br>EPTC +<br>AD—67<br>(Composition according to Example 1.2 24 l(ha) | 4.8<br>8.6<br>2.16 | ppi | 2 2 2 | 1 1 2 | 2 2 | 2 | | 1 1 1 |
| 6. Acetochlor +<br>EPTC +<br>AD—67<br>(Composition according to Example 1.1 10 l(ha) | 2.0<br>3.5<br>0.6 | ppi | 2 3 2 | 2 2 2 | 3 3 3 | 3 3 3 | | 1 1 1 |
| 7. Acetochlor +<br>EPTC +<br>AD—67<br>(Composition according to Example 1.1 12 l(ha) | 2.4<br>3.6<br>0.72 | ppi | 2 2 2 | 1 1 2 | | | | 1 1 1 |
| 8. Acetochlor +<br>EPTC +<br>AD—67<br>(Composition according to Example 1.1 24 l(ha) | 4.8<br>8.64<br>1.44 | ppi | 2 2 2 | 1 2 1 | | 3 3 3 | | 1 1 1 |
| 9. EPTC[b]<br>Acetochlor[a] | 3.75<br>2.0 | ppi<br>pre | 3 3 3 | 3 2 2 | 4 3 3 | 3 3 3 | | 1 1 1 |
| 10. Acetochlor[a]<br>Dicamba[f] | 2.5<br>0.268 | pre<br>post | 5 6 6 | 6 6 5 | | 3 4 3 | | 1 1 1 |
| Control frequency % | | | 38 | 42 | 10 | 10 | | |

Example 4

Test conditions:
Soil conditions
Type of soil: lime deposit brown forest soil
Humus: 2.84%
Heaviness (Arany): 43
$pH_{(KCl)}$: 7.8
Time of maize sowing: 03.05
Art: Pi 3732 MSC
Weeds: The area is mainly covered by dicotyledonous weeds, and is moderately infected by monocotyledons.
Total weed covering: 25%
CHEAL: 18.75%
AMABL: 2.12%
AMBEL: 0.62%
ECHCR: 0.62%
BILCO: 0.62%
SINAR: 0.10%
DIPMU: 0.10%

The data of weed covering refer to the beginning of the cultivation period.
Time of bonitation: 01.06.
Further test conditions:
Parcel size: 4 × 10 m
Number of replicates: 4
Control: 4 × 10 m untreated parcel between the treated parcels, 3 per replicates
Spray liquid: 300 l/ha
Term of treatment: 03.05. presowing. 15.05. pre-emergence
Precipitation conditions:
Within 7 days after the presowing treatment: 20 mm
Within 7 days after the pre-emergent treatment: 25 mm
In the spring and at the beginning of summer there were considerably more rainfalls than usually: April: 46 mm, May. 90 mm, June 55 mm
On the test area infection caused by dicotyledonous plants, mainly CHEAL and AMACL were typical. The soil was in about 15—20% cloddy and covered with stock residues at the time of the treatment.

The combinations of the invention showed even under such circumstances an expressively good weed killing effect (Table X, treatments Nos. 1—6 and 8—12), against dicotyledonous plants mentioned above. This result unambiguously proves the synergistic activity of the active ingredients according to the invention as a consequence of which two herbicides effective against monocotyledons act in a combination according to the invention against dicotyledonous weeds too.

TABLE X
Time of evaluation: 01.06

| Active ingredient | Dose 1 kg/ha | Application method | Weed killing activity EWRC values AMCL 1.2.3.4 | CHEAL 1.2.3.4 | Phytotoxic activity 1.2.3.4 |
|---|---|---|---|---|---|
| 1. EPTC + | 3.6 | ppi | 1 1 1 1 | 3 3 2 2 | 2 2 2 3 |
| acetochlor + | 2.0 | | | | |
| AD—67 | 0.6 | | | | |
| (Composition according to Example 1.1 10 l(ha) | | | | | |
| 2. EPTC+AD—67[b] | 3.75 | | | | |
| | +0.375 | ppi | 1 1 1 1 | 1 1 1 1 | 2 2 2 2 |
| Acetochlor[a] | 2.0 | pre | | | |
| AD—67 | 0.2 | | | | |
| 3. Butylate + | 3.6 | ppi | 1 1 1 1 | 2 1 1 1 | 2 2 2 2 |
| acetochlor | 2.0 | | | | |
| AD—67 | 0.6 | | | | |
| (Composition according to Example 1.5 10 l/ha) | | | | | |

Continuation of Table X

| Active ingredient | Dose 1 kg/ha | Application method | Weed killing EWRC values AMCL 1.2.3.4 | CHEAL 1.2.3.4 | Phytotoxic activity 1.2.3.4 |
|---|---|---|---|---|---|
| 4. Butylate | 4.0 | ppi | 1 1 1 1 | 1 1 1 1 | 2 2 2 2 |
| Acetochlor + | 2.0 | pre | | | |
| AD—67 | 0.2 | | | | |
| 5. EPTC + | 3.6 | ppi | 1 1 1 1 | 3 2 1 2 | 3 2 1 1 |
| alachlor + | 2.4 | | | | |
| AD—67 | 0.6 | | | | |
| (Composition according to Example 1.5 10 l(ha) | | | | | |
| 6. EPTC+AD—67[b] | 3.75 +0.375 | ppi | 1 1 1 1 | 1 1 1 1 | 1 1 1 1 |
| Alachlor[e] | 2.5 | pre | | | |
| 7. Control | | | | | |
| 8. Butylate + | 3.6 | | 1 1 1 1 | 1 2 1 2 | 1 1 1 1 |
| alachlor + | 2.4 | ppi | | | |
| AD—67 | 0.6 | | | | |
| (Composition according to Example 1.7 10 l(ha) | | | | | |
| 9. EDTC + | 3.75 | ppi | 1 1 1 1 | 2 2 2 2 | 1 1 1 1 |
| AD—67 + | 0.375 | | | | |
| propachlor | 3.75 | | | | |
| (Composition according to Example 1.10 15 l(ha) | | | | | |
| 10. EPTC+AD—67[b] | 3.75+0.375 | ppi | 1 1 1 1 | 2 2 1 2 | 1 1 1 1 |
| Propachlor[i] | 3.25 | pre | | | |
| 11. Butylate + | 4.0 | ppi | 1 1 1 1 | 3 3 3 2 | 1 1 1 1 |
| propachlor + | 4.0 | | | | |
| AD—67 | 0.8 | | | | |
| (Composition according to Example 1.9 16 l(ha) | | | | | |
| 12. Butylate[g] | 4.0 | ppi | 1 1 1 1 | 2 2 3 3 | 1 1 1 1 |
| Propachlor[i] | 3.25 | pre | | | |
| 13. Control | | | | | |
| 14. EPTC+AD—67[b] | 4.5+0.45 | ppi | | | |
| Atrazin[d] | 1.34 | | | | |
| 15. Butylate[g] | 4.0 | ppi | 1 1 1 1 | 1 1 1 1 | 1 1 1 1 |
| Atrazin[d] | 1.35 | | | | |
| 16. Acetochlor[a] | 1.8 | pre | 1 1 1 1 | 1 1 1 1 | 1 1 1 1 |
| Atrazin[d] | 1.2 | | | | |
| 17. Alachlor[i] | 3.0 | pre | 1 1 1 1 | 1 1 1 1 | 1 1 1 1 |
| Atrazin[d] | 1.35 | | | | |
| 18. Propachlor[i] | 4.55 | pre | 1 1 1 1 | 1 1 1 1 | 1 1 1 1 |
| 19. Control | | | | | |

Example 5

Test conditions:
Soil conditions:
Type of soil: meadow soil
Humus: 3.34%
Heaviness(Arany): 39.9
$pH_{(KCl)}$: 7.9
Green crop: 1. year maize. 2. year sunflower. 3. year winter wheat
Sowing of maize: 4 year 26.04
Art: Pi 3732 MSC
Weeds:
The area is characterized by intensive mono- and dicotyledonous weed coverage. On the control areas the total weed coverage amounted to 37.5% at the first evaluation, on 03. 06.

| | |
|---|---|
| CHEAL | 18.75 |
| ECHCR | 15.62 |
| AMBEL | 3.12 |
| ANAAR | 0.10 |
| EUPFA | 0.10 |
| CHEHY | 0.10 |
| CONAR | 0.36 |
| CONAR | 0.36 |
| STAAN | 0.10 |
| SYNAR | 0.36 |
| DPMU | 0.36 |
| SONAS | 0.36 |

Test conditions:
Parcel size: 4 ×10 m
Replicates: 4
Control: 4 × 10 m untreated parcel between the treated parcels, 3 per replicates
Amount of spray liquid: 300 l/ha
Time of treatment: 25.04. (presowing). 02.05 (pre-emergent)
Precipitation conditions:
On 30 April after the presowing treatment 10.5 mm of precipitation was falling. Subsequently in May 91.9 mm and in June 108.4 mm and within 7 days after the pre-emergent treatment 18.0 mm rainfall followed. Spring and the beginning of summer was characterized by exceptionally much rainfall. After the 14th day after the pre-emergent treatment 45 mm of precipitation was raining on the test area.
Daily precipitation following the treatments:

| | | | |
|---|---|---|---|
| On 30 April | 10.5 mm | On 31 May | 2.5 mm |
| On 05 May | 7.6 mm | | 91.9 mm |
| On 08 May | 4.2 mm | On 04 June | 0.6 mm |
| On 09 May | 7.0 mm | On 06 June | 1.8 mm |
| On 10 May | 15.7 mm | On 07 June | 11.1 mm |
| On 13 May | 0.7 mm | On 08 June | 3.0 mm |
| On 16 May | 13.1 mm (plant average) | On 15 June | 14.2 mm |
| On 19 May | 4.2 mm | On 18 June | 1.0 mm |
| On 20 May | 6.8 mm | On 22 June | 22.0 mm |
| On 21 May | 0.3 mm | On 23 June | 45.0 mm |
| On 22 May | 0.6 mm | On 24 June | 4.1 mm |
| On 23 May | 10.7 mm | On 27 June | 2.4 mm |
| On 24 May | 6.0 mm | On 29 June | 15.5 mm |
| On 27 May | 5.2 mm | On 30 June | 8.7 mm |
| On 29 May | 7.3 mm | | 108.4 mm |

TABLE XI

| Active ingredient | Dose 1 kg/ha | Application method | Weed killing effect EWRC values ECHCR 1.2.3.4 | CHEAL 1.2.3.4 | Phytotoxic effect 1.2.3.4 |
|---|---|---|---|---|---|
| 1. EPTC +<br>acetochlor<br>AD—67<br>(Composition according to Example 1.1) | 3.6<br>2.0<br>0.6 | ppi | 2 2 2 2 | 2 2 2 2 | 1 1 1 1 |
| 2. EPTC+AD—67[b]<br>Acetochlor +<br>AD—67[j] | 3.6+0.36<br><br>0.2 | ppi<br>pre | 1 1 1 1 | 1 1 2 1 | 2 2 1 1 |
| 3. Butylate +<br>acetochlor +<br>AD—67<br>(Composition according to Example 1.5) | 3.6<br>2.0<br>0.6 | ppi | 1 1 3 2 | 1 1 2 2 | 2 2 2 2 |
| 4. Butylate[g]<br>Acetochlor[j]<br>AD—67 | 3.6<br>2.0<br>0.6 | ppi<br>pre | 1 1 1 1 | 1 1 1 1 | 2 2 2 1 |
| 5. EPTC +<br>Alachlor[k]<br>AD—67<br>(Composition according to Example 1.3) | 3.6<br>2.5<br>0.6 | ppi | 1 1 1 2 | 1 1 1 1 | 2 2 2 1 |
| 6. EPTC+AD—67[b]<br>Alachlor[1] | 3.75+0.37<br>2.5 | ppi<br>pre | 1 1 1 1 | 1 1 1 1 | 2 2 2 2 |
| 7. Control | | | | | |
| 8. Acetochlor[j]<br>AD—67+<br>chlorobromuron | 2.4<br>0.2<br>1.5 | pre | 1 1 1 1 | 1 1 1 1 | 6 3 3 3 |
| 9. Butylate[g]<br>Alachlor[l] | 4.0<br>2.5 | ppi<br>pre | 1 1 1 1 | 1 1 1 1 | 1 1 1 1 |
| 10. EPTC+AD—67[b]<br>Propachlor[i] | 3.75+0.375<br>3.25 | ppi | 3 3 4 4 | 2 2 3 3 | 1 1 1 1 |
| 11. EPTC+AD—67[b]<br>Propachlor[i] | 3.75+0.37<br>3.25 | ppi<br>pre | 1 1 1 3 | 2 2 2 2 | 1 1 1 1 |
| 12. Butylate +<br>propachlor +<br>AD—67<br>(Composition according to Example 1.9 16 l(ha) | 4.0<br>4.0<br>0.8 | ppi | 2 3 3 3 | 3 2 2 2 | 1 1 1 1 |
| 13. Butylate[g]<br>Propachlor[i] | 4.0<br>3.25 | ppi<br>pre | 2 2 2 2 | 2 1 2 2 | 1 1 2 1 |
| 14. Control | | | | | |
| 15. EPTC+AD—67[b]<br>Atrazin[d] | 4.5+0.45<br>1.35 | ppi | 4 4 3 2 | 1 1 1 1 | 1 1 1 1 |

Continuation of Table XI

| Active ingredient | Dose 1 kg/ha | Application method | Weed killing effect EWRC values ECHCR 1.2.3.4 | CHEAL 1.2.3.4 | Phytotoxic effect 1.2.3.4 |
|---|---|---|---|---|---|
| 16. Butylate[g] Atrazin[d] | 4.0 1.35 | ppi | 4 4 3 2 | 1 1 1 1 | 1 1 1 1 |
| 17. Propachlor[l] Atrazin[d] | 4.55 1.35 | pre | 2 2 1 1 | 1 1 1 1 | 1 1 1 1 |
| 18. Acetochlor[a] Atrazin[d] | 1.8 1.2 | pre | 1 1 1 1 | 1 1 1 1 | 3 2 2 4 |
| 19. Alachlor[l] | 3.0 | pre | 1 1 1 1 | 1 1 1 1 | 1 2 2 2 |

On the test area ECHCR and CHEAL infection is critical. The combinations according to the invention showed a very good result against dicotyledoncus plants inspite of the fact that the combination does not contain any component being active against dicotyledons. Consequently a synergistic effect occurs between the active ingredients according to the invention. The combinations according to the invention act on the sowing area as excellent mono- and dicotyledonous weed killing agents during the whole vegetation period of maize without containing dicotyledonous weed killers, and they even surpass the activity of known mono- and dicotyledonous weed killing combinations. By using the combinations according to the invention the so far used two weed killing steps in the agriculture (ppi and pre) can be replaced by one weed killing step (ppi) resulting in considerable decrease of the weed killing costs.

**Claims**

1. Antidoted selective herbicidal compositions characterized by containing together a chloro acetanilide derivative of the general formula (I)

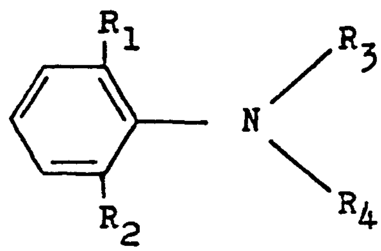

(I)

wherein

$R_1$ and $R_2$ represents independently from each other hydrogen or $C_{1-4}$ alkyl,
$R_3$ stands for methoxy-methyl, ethoxy-methyl, propyl or isopropyl group,
$R_4$ stands for chloroacetyl

and a thiolcarbamate derivative of the general formula (II)

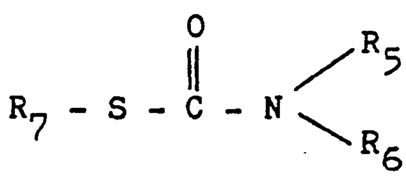

(II)

wherein $R_5$, $R_6$ and $R_7$ represent independently from each other straight or branched chain $C_{1-5}$ alkyl as herbicidal active ingredient and N-(dichloroacetyl)-1-oxa-4-aza-spiro-(4,5)-decane of the formula (III)

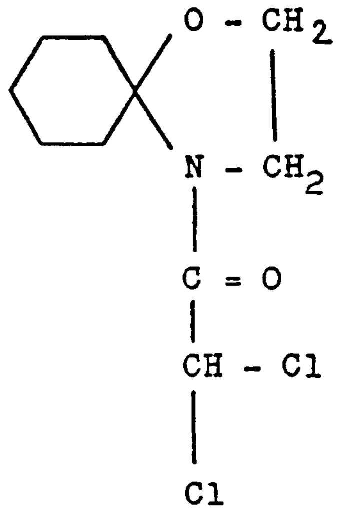

(III)

or (2-dichloromethyl)-2-methyl-4-ethyl-1,3-dioxane of the formula (IV)

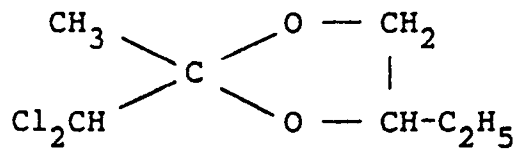

(IV)

or (2-dichloromethyl)-2-methyl-1,3-dioxolane of the formula (V)

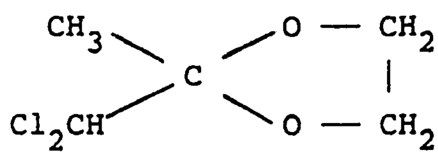

(V)

as antidote besides liquid solvents and/or diluents, preferably xylene, and surfactants, preferably ionic or non-ionic tensides, wherein the weight ratio of the chloro acetanilide derivative of the general formula (I) and the thiol carbamate derivative of the general formula (II) and the antidotes amounts to 1,2—1—1:3.1:1—0,2.

2. A method of treatment of maize for combatting undesired mono- and dicotyledonous plants comprising applying into the soil on the sowing area a chloro acetanilide derivative of the general formula (I) as herbicide at a rate of 1.0—7.1 kg/ha, preferably 1.0—4.5 kg/ha, a thiol carbamate derivative herbicide of the general formula (II) at a rate of 1.0—10 kg/ha, preferably 1.0—8.0 kg/ha and optionally a known antidote at a rate of 0.1—4.0 kg/ha, preferably 0.3—3.0 kg/ha before sowing simultaneously in a finely divided form.

**Patentansprüche**

1. Selektive, herbizide Antidotzusammensetzungen dadurch gekennzeichnet, daß sie zusammen ein Chloracetanilidderivat der allgemeinen Formel (I):

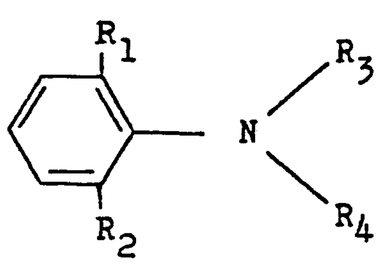

(I)

wobei $R_1$ und $R_2$ unabhängig voneinander Wasserstoff oder $C_{1-4}$ Alkyl darstellen, $R_3$ für Methoxy-Methyl, Ethoxy-Methyl-, Propyl- oder Isopropylgruppe, und $R_4$ für Chloroacetyl stehen, und ein Thiolcarbamatderivat der allgemeinen Formel (II)

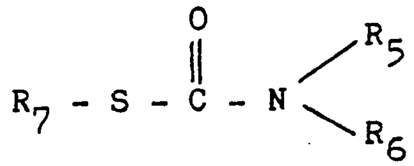

(II)

wobei $R_5$, $R_6$ und $R_7$ unabhängig voneinander ein geradkettiges oder verzweigtes $C_{1-5}$ Alkyl darstellen, als herbizid wirksames Mittel und N-(dichloroacetyl)-1-oxa-4-aza-spiro-(4,5)-dekan der Formel (III)

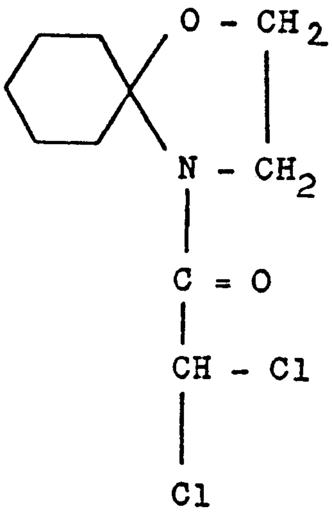

(III)

oder 2-(dichloromethyl)-2-methyl-4-ethyl-1,3-dioxolan der Formel (IV)

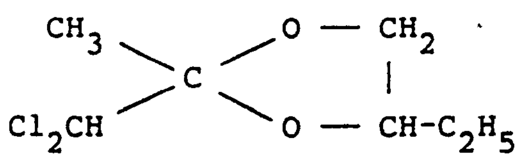

(IV)

oder 2-(dichloromethyl)-2-methyl-1,3-dioxolan der Formel (V)

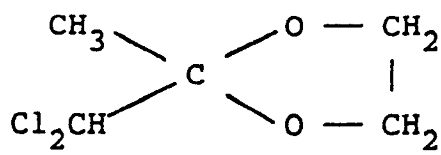

(V)

als Antidot neben flüssigen Lösungsmitteln und/oder Streckmitteln, vorzugsweise Xylol und oberflächenaktiven Mitteln, vorzugsweise ionischen oder nicht-ionischen Tensiden, enthält, wobei das Gewichtsverhältnis des Chloroacetanilidderivats der allgemeinen Formel (I) und des Thiolcarbamatderivats der allgemeinen Formel (II) und der Antidoten 1,2—1:3—1:1—0,2 beträgt.

2. Behandlungsverfahren von Mais zur Bekämpfung von ungewünschten mono- und dicotyledonen Pflanzen, das die gleichzeitige Anwendung eines Chloroacetanilidderivats der allgemeinen Formel (I) als herbizide Mittel in einer Menge von 1,0 bis 7,1 kg/ha, vorzugsweise 1,0—4,5 kg/ha, eines Thiolcarbamatderivatherbizids der allgemeinen Formel (II) in einer Menge von 1,0—10 kg/ha, vorzugsweise von 1,0—8,0 kg/ha, und gegebenenfalls eines bekannten Antidots in einer Menge von 0,1—4.0 kg/ha, vorzugsweise 0,3—3,0 kg/ha, vor dem Säen in einer fein verteilten Form gegenüber dem Boden auf der Saatfläche umfaßt.

**Revendications**

1. Compositions herbicides sélectives antidotées contenant simultanément: un dérivé de chloroacétanilide de formule générale (I):

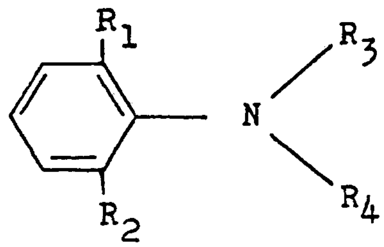

(I)

dans laquelle

$R_1$ et $R_2$ représentent indépendamment l'un de l'autre un atome d'hydrogène ou un radical alkyle en $C_1$ à $c_4$;

$R_3$ représente un radical méthoxyméthyle, éthoxyméthyle, propyle ou isopropyle;

$R_4$ représente le radical chloroacétyle; et un dérivé de thiolcarbamate de formule générale (II):

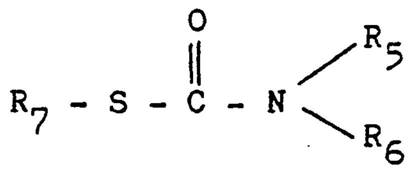

(II)

dans laquelle:

$R_5$, $R_6$ et $R_7$ représentent indépendamment l'un de l'autre un radical alkyle à chaîne droite ou ramifiée en $C_1$ à $C_5$,

comme ingrédients herbicides actifs; et

du N-(dichloroacétyl)-1-oxa-4-aza-spiro-(4,5)-décane de formule (III):

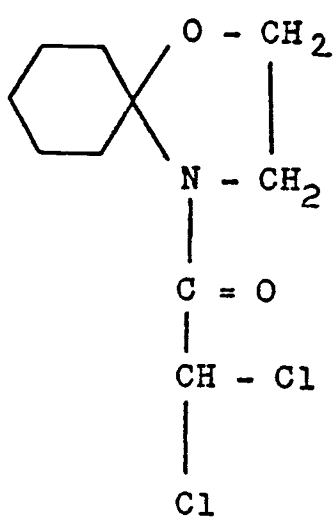

(III)

ou

du 2-(dichlorométhyl)-2-méthyl-4-éthyl-1,3-dioxolane de formule (IV):

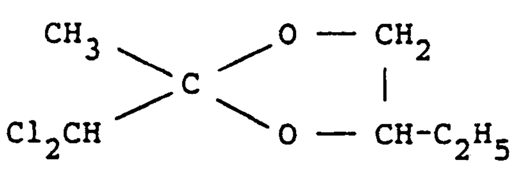

(IV)

ou

du 2-(dichlorométhyl)-2-méthyl-1,3-dioxolane de formule (V):

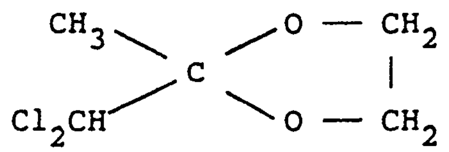

(V)

en tant qu'antidote en plus de solvants et/ou de diluants liquides, de préférence du xylène, et d'agents tensio-actifs, de préférence des agents tensio-actifs ioniques ou non ioniques dans lesquels le rapport pondéral du dérivé de chloroacétanilide de formule générale (I) et du dérivé de thiolcarbamate de formule générale (II) et des antidotes est égal à (1,2 à 1)/(3 à 1)/(1 à 0,2).

2. Procédé de traitement du maïs permettant de combattre les mauvaises herbes mono- et dicotylédones et consistant à appliquer simultanément dans le sol, sur la zone de semailles, un dérive de chloroacétanilide de formule générale (I) en tant qu'herbicide, au taux de 1,0 à 7,1 kg/ha, de préférence 1,0 à 4,5 kg/ha, un herbicide à base de dérivé de thiolcarbamate de formule générale (II), au taut de 1,0 à 10 kg/ha, de préférence de 1,8 à 8.0 kg/ha, et éventuellement un antidote connu au taux de 0,1 à 4,0 kg/ha, de préférence 0,3 à 3,0 kg/ha, avant les semailles sous forme finement divisée.